# FASCICULE DE BREVET EUROPEEN

(11) **EP 3 873 216 B1**
(45) Date de publication et mention de la délivrance du brevet: **31.05.2023**
(21) Numéro de dépôt: 19795019.9
(22) Date de dépôt: 31.10.2019
(51) Int. Cl.: A21C 11/04

(54) **DISPOSITIF DE PINÇAGE-FORMAGE, AINSI QUE SYSTÈME DE PRODUCTION EN CONTINU DE PRODUITS ALIMENTAIRES CO-EXTRUDÉS EN FORME DE BERLINGOT**
DRÜCK-FORM-VORRICHTUNG UND SYSTEM ZUR KONTINUIERLICHEN HERSTELLUNG VON IN BEUTELFORM COEXTRUDIERTEN LEBENSMITTELPRODUKTEN
PINCHING-SHAPING DEVICE, AND SYSTEM FOR CONTINUOUS PRODUCTION OF FOOD PRODUCTS CO-EXTRUDED IN POUCH FORM

(30) Priorité: 02.11.2018 FR 1860134
(43) Date de publication de la demande: 08.09.2021
(73) Titulaire: Clextral, 42700 Firminy (FR)
(72) Inventeur: ASENSIO, Luis, 42600 SAVIGNEUX (FR); HUYNH, Jimmy, 42390 VILLARS (FR); PROST, Julie, Clearwater, Florida 33761 (US)
(74) Mandataire: Lavoix
(86) Numéro de dépôt international: PCT/EP2019/079820
(87) Numéro de publication internationale: WO 2020/089391

(56) Documents cités:
- FR-A- 493 088
- US-A- 3 504 640
- US-A- 4 289 470
- US-A- 4 780 329
- US-B1- 6 174 556

## Description

La présente invention concerne un dispositif de pinçage-formage. Elle concerne également un système de production en continu de produits alimentaires co-extrudés en forme de berlingot, comportant un dispositif de pinçage-formage.

Dans le domaine de l'alimentation humaine et animale, il est connu de proposer des produits extrudés, c'est-à-dire fabriqués par extrusion. On parle de produits co-extrudés lorsque, à la sortie de la machine d'extrusion, les produits sont constitués d'une enveloppe tubulaire externe qui est remplie d'un fourrage généralement pâteux. L'enveloppe externe de ces produits co-extrudés est souvent à base de farines de céréale. De tels produits co-extrudés sont par exemple commercialisés en tant que céréales de petit-déjeuner, goûters pour les enfants, produits apéritifs, friandises pour animaux, etc.

Ces produits sont obtenus à partir d'un jonc de matières alimentaires, co-extrudé, auquel est appliquée une opération de pinçage-formage destinée à les individualiser le long du jonc, en leur donnant une forme géométrique prédéterminée et en les séparant au moins partiellement les uns des autres. Cette opération de pinçage-formage est réalisée à l'aide d'un dispositif ad hoc, souvent appelé « pinceur-formeur » dans le domaine, en entrée duquel le jonc est introduit et en sortie duquel les produits individualisés sont récupérés. L'invention s'intéresse plus spécifiquement aux pinceurs-formeurs qui incluent une ou plusieurs paires d'outils cylindriques parallèles, les outils de chaque paire étant appliqués tangentiellement l'un contre l'autre de manière à pincer-former entre leur périphérie extérieure un jonc introduit tangentiellement entre eux lorsqu'ils sont entraînés en rotation sur eux-mêmes dans des directions opposées.

Dans un domaine différent, à savoir celui de la mise en forme d'un ruban d'une pâte alimentaire, notamment un ruban de pâte à lasagnes, US 4 780 329 divulgue un dispositif de formage, comportant deux outils rotatifs superposés, à savoir un outil supérieur et un outil inférieur. Chacun de ces outils supérieur et inférieure comporte deux roues coaxiales adjacentes, à savoir une roue gauche et une roue droite. Chacune des quatre roues est pourvue, sur sa périphérie extérieure, de lamelles radialement saillantes, séparées deux à deux par des rainures. Chacune des lamelles de chaque roue présente, sur son bord libre radialement opposé à l'axe central de la roue, une surface inclinée dont le sommet est relié au reste de la roue par un bord latéral qui s'étend radialement à l'axe central. A chaque fois qu'une des lamelles d'un des outils supérieur et inférieur se retrouve, lors de la rotation des outils, radialement interposée entre ces deux outils, cette lamelle est à la fois (i) engrenée sans contact entre deux lamelles de la roue latérale correspondante de l'autre outil et (ii) alignée avec une des lamelles de la roue latérale opposée de l'autre outil, avec mise en contact axial des bords latéraux respectifs de ces deux lamelles. L'action de ce dispositif de formage sur un ruban de pâte alimentaire conduit à cisailler une ligne centrale du ruban pour former des fentes le long de cette ligne centrale, tout en marquant des ondulations de part et d'autre de cette ligne centrale.

Le but de la présente invention est de proposer un pinceur-formeur qui permet, à partir d'un jonc, d'obtenir de manière simple et économique de nouvelles formes de produits.

A cet effet, l'invention a pour objet un dispositif de pinçage-formage, tel que défini à la revendication 1.

L'invention a également pour objet un système de production en continu de produits alimentaires co-extrudés en forme de berlingot, tel que défini à la revendication 14.

Grâce à l'inclinaison des surfaces complémentaires de pincement du jonc, ménagées par les lamelles des outils, et grâce à l'alternance de cette inclinaison suivant la périphérie extérieure des outils, le pinceur-formeur conforme à l'invention permet de pincer un jonc en plusieurs zones successives le long du jonc, qui sont chacune inclinées par rapport aux axes centraux respectifs parallèles des outils, et dont l'orientation de l'inclinaison alterne entre deux zones de pincement successives : chaque nouvelle zone de pincement s'avère ainsi décalée angulairement de la précédente zone de pincement, ce qui confère au produit individualisé entre ces deux zones de pincement une forme de berlingot. On notera que la forme de berlingot est connue en soi, en particulier pour les bonbons éponymes : dans le domaine de la confiserie, il est connu d'obtenir la forme en berlingot grâce à une berlingotière qui associe deux roues dentées tangentielles horizontales, entre lesquelles un jonc de sucre candi est introduit pour être pincé horizontalement en une succession de zones le long du jonc, et deux roues dentées tangentielles verticales qui appliquent sur le jonc un pincement vertical entre deux pincements horizontaux appliqués par les roues dentées horizontales. Une telle berlingotière nécessite donc, pour chaque jonc, quatre outils de pinçage-formage, ce qui la rend chère, ainsi qu'encombrante et donc peu adaptée à des lignes de production en continu de produits alimentaires à partir de plusieurs joncs co-extrudés adjacents, sortant d'une même machine d'extrusion. Le dispositif de pinçage-formage conforme à l'invention permet de traiter chaque jonc, pour le subdiviser en produits conformés en berlingot, avec seulement une paire d'outils, notamment agencés l'un au-dessus de l'autre, ce qui est particulièrement efficace et économique, tout en permettant d'ajuster finement la pression de pincement appliquée au jonc par les surfaces de pincement ménagées par les lamelles des outils. Par ailleurs, en jouant sur l'inclinaison des surfaces de pincement des deux outils d'une même paire, l'invention permet d'obtenir des produits avec des formes de berlingot originales, dans lesquelles les lignes de pincement prévues aux deux extrémités du produit peuvent soit être rigoureusement à 90° l'une de l'autre, soit être décalées angulairement de moins de 90°. D'autres aspects du dispositif de pinçage-formage conforme à l'invention, qui seront détaillés par la suite, renforcent son intérêt et sa pertinence dans le domaine de la production en continu de produits alimentaires co-extrudés, le cas échéant à partir de plusieurs joncs adjacents sortant d'une même machine d'extrusion.

Des caractéristiques additionnelles avantageuses du dispositif de pinçage-formage conforme à l'invention sont spécifiées aux autres revendications.

L'invention sera mieux comprise à la lecture de la description qui va suivre, donnée uniquement à titre d'exemple et faite en se référant aux dessins sur lesquels :
- la figure 1 est une vue en perspective d'un système de production en continu de produits alimentaires co-extrudés, comportant un dispositif de pinçage-formage conforme à l'invention ;
- la figure 2 est une vue en élévation d'un premier outil d'une paire d'outils appartenant au dispositif de pinçage-formage de la figure 1 ;
- la figure 3 est une vue en élévation selon la flèche III de la figure 2 ;
- la figure 4 est une coupe selon la ligne IV-IV de la figure 2 ;
- la figure 5 est un schéma illustrant la superposition géométrique de deux parties distinctes de l'outil de la figure 2 ;
- la figure 6 est une vue en élévation similaire à la figure 2, mais du second outil de la paire d'outils appartenant au dispositif de pinçage-formage de la figure 1 ;
- la figure 7 est une vue en élévation selon la flèche VII de la figure 6 ;
- la figure 8 est une coupe selon la ligne VIII-VIII de la figure 6 ;
- la figure 9 est une coupe selon la ligne IX-IX de la figure 8 ;
- la figure 10 est une vue en perspective de la paire associant l'outil de la figure 2 et l'outil de la figure 6, dans une configuration fonctionnelle que cette paire d'outils occupe au sein du dispositif de pinçage-formage de la figure 1 ;
- la figure 11 est une vue en élévation selon la flèche XI de la figure 10, illustrant seulement une partie des deux outils ;
- la figure 12 est une section selon la ligne XII-XII de la figure 11 ;
- les figures 13 à 15 sont des vues similaires à la figure 11, illustrant trois étapes successives du fonctionnement de la paire d'outils au sein du dispositif de pinçage-formage de la figure 1 ;
- la figure 16 est une vue similaire à la figure 1, montrant uniquement une partie d'une variante du dispositif de pinçage-formage conforme à l'invention ;
- la figure 17 est une coupe dans le plan XVII de la figure 16 ;
- la figure 18 est une vue similaire à la figure 10, illustrant une variante de la paire d'outils appartenant au dispositif de pinçage-formage conforme à l'invention ;
- la figure 19 est une vue en perspective d'un premier outil d'une paire d'outils appartenant à une variante du dispositif de pinçage-formage conforme à l'invention ; et
- la figure 20 est une vue en perspective du second outil de la paire d'outils appartenant à la variante du dispositif de pinçage-formage envisagée à la figure 19.

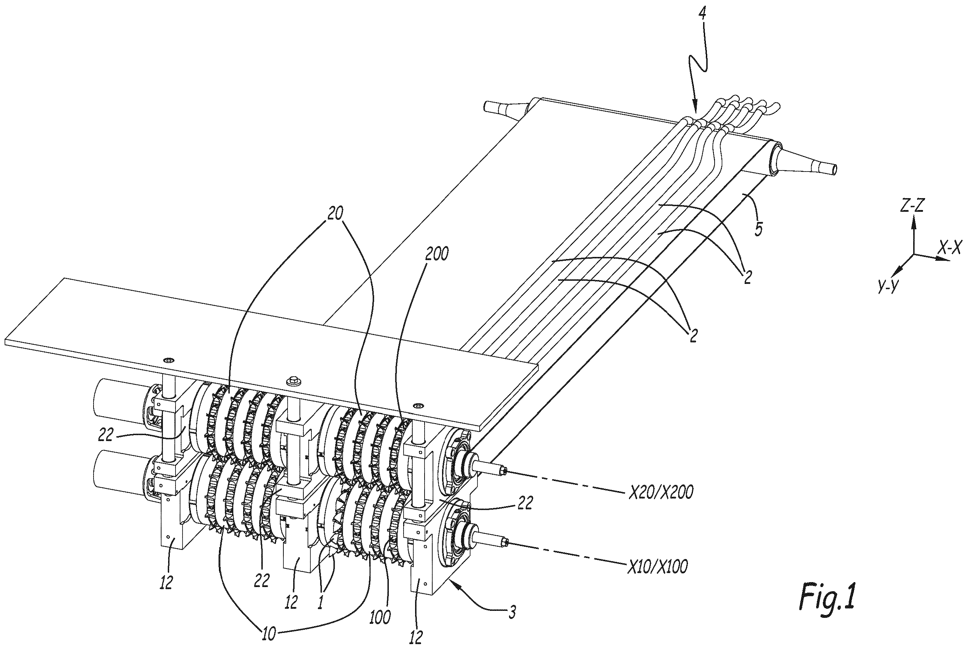

Sur la figure 1 est représenté un système de production en continu de produits alimentaires co-extrudés 1 en forme de berlingot. Ce système permet de produire, à partir d'un ou de plusieurs joncs alimentaires co-extrudés 2 parallèles, les produits en forme de berlingot 1. A cet effet, ce système comporte un dispositif de pinçage-formage 3, qui permet d'appliquer un pinçage-formage sur les joncs 2 pour en obtenir les produits en forme de berlingot 1 et qui sera détaillé par la suite, ainsi qu'une alimentation continue 4 permettant d'alimenter en continu le dispositif de pinçage-formage 3 par les joncs 2.

Par commodité, la suite de la description est orientée en référence à un repère orthogonal d'axes référencés respectivement X-X, Y-Y et Z-Z, comme indiqué notamment sur la figure 1. En pratique, dans une configuration fonctionnelle du système de production de la figure 1, les axes X-X et Y-Y définissent un plan horizontal, tandis que l'axe Z-Z s'étend à la verticale.

Les joncs 2, qui, dans l'exemple de réalisation de la figure 1, sont au nombre de quatre, sont des cordons de matières alimentaires, issus d'un procédé d'extrusion, connu en soi et non limitatif de l'invention. Les spécificités des joncs 2 ne sont pas limitatives de l'invention du moment que ces joncs présentent une structure co-extrudée, constituée d'une enveloppe tubulaire externe, généralement à base de farines de céréale, remplie d'un fourrage, généralement pâteux. En pratique, les joncs 2 peuvent provenir d'une même machine d'extrusion, équipée d'une filière de sortie appropriée, les joncs 2 étant alors agencés les uns à côté des autres, à faible distance les uns des autres, comme illustré à la figure 1.

En plus des joncs 2, l'alimentation continue 4 comporte tout moyen approprié permettant de transporter en continu les joncs 2 depuis leur sortie d'une machine d'extrusion jusqu'au dispositif de pinçage-formage 3. Dans l'exemple illustré à la figure 1, l'alimentation continue 4 comporte à cet effet un tapis de convoyage 5 entraîné par une motorisation ad hoc, non représentée.

Comme représenté sur la figure 1, le dispositif de pinçage-formage 3 comporte des rouleaux parallèles adjacents 10 et 20, entre lesquels les joncs 2 sont introduits tangentiellement aux fins de leur individualisation par pincement, comme détaillé par la suite. Dans la configuration fonctionnelle envisagée à la figure 1, les rouleaux du dispositif de pinçage-formage 3, entre lesquels les joncs 2 sont introduits, s'étendent chacun horizontalement et sont superposés verticalement, c'est-à-dire agencés en alignement selon l'axe Z-Z. Plus précisément, dans l'exemple de réalisation de la figure 1, le dispositif de pinçage-formage 3 comporte deux rouleaux inférieurs 10, qui sont coaxiaux et qui sont centrés sur un axe X10 s'étendant suivant l'axe X-X, et deux rouleaux supérieurs 20, qui sont coaxiaux et qui sont centrés sur un axe X20 s'étendant selon l'axe X-X, avec les axes X10 et X20 alignés l'un avec l'autre suivant l'axe Z.Z. Suivant l'axe Z-Z, entre chacun des rouleaux inférieurs 10 et l'un des rouleaux supérieurs 20, situé à son aplomb vertical, est délimité un passage, à l'intérieur duquel les joncs 2, qui s'étendent en longueur suivant cet axe Y-Y, sont introduits suivant l'axe Y-Y, et dans lequel les joncs 2 subissent l'opération de pinçage-formage pour obtenir les produits en forme de berlingot 1, comme expliqué plus en détail par la suite. On notera que sur la figure 1, pour des raisons de visibilité, un seul des quatre joncs 2 alimentant le dispositif de pinçage-formage 3 est représenté comme aboutissant à la production des produits en forme de berlingot 1, étant entendu que, en réalité, les trois autres joncs 2 alimentant le dispositif de pinçage-formage 3 donnent également lieu, en sortie de ce dispositif, à la production des produits en forme de berlingot 1.

Afin de réaliser l'opération de pinçage-formage, les rouleaux inférieurs 10 sont entraînés en rotation autour de l'axe X10 et les rouleaux supérieurs 20 sont entraînés en rotation autour de l'axe X20, en tournant en sens inverse des rouleaux inférieurs 10. A cet effet, les rouleaux inférieurs 10 et les rouleaux supérieurs 20 sont entraînables par une motorisation ad hoc du dispositif de pinçage-formage 3, non représentée sur les figures. L'écartement, suivant l'axe Z-Z, entre les rouleaux inférieurs 10 et les rouleaux supérieurs 20 est commandé, avantageusement de manière réglable, par des éléments de support 12 et 22 du dispositif de pinçage-formage 3, qui supportent respectivement les rouleaux inférieurs 10 et les rouleaux supérieurs 20, tout en autorisant la rotation de ces derniers autour de leurs axes X10 et X20. Suivant une disposition optionnelle avantageuse, le dispositif de pinçage-formage 3 intègre une motorisation, non représentée, agissant sur le positionnement relatif, suivant l'axe Z-Z, des éléments de support 12 et 22, afin de régler l'écartement selon l'axe Z-Z entre les rouleaux inférieurs 10 et les rouleaux supérieurs 20. Les spécificités du dispositif de pinçage-formage 3 concernant l'agencement relatif et l'entraînement des rouleaux 10 et 20 ne sont pas limitatives de l'invention.

Pour pincer-former chacun des joncs 2, le dispositif de pinçage-formage 3 comporte une paire d'outils, associant chacune un outil inférieur 100, porté par l'un des rouleaux inférieurs 10, et un outil supérieur 200, porté par l'un des rouleaux supérieurs 20. Pour traiter les différents joncs 2, le dispositif de pinçage-formage 3 comporte plusieurs paires d'outils 100 et 200, qui sont identiques les unes aux autres, une seule paire de ces outils étant détaillée par la suite. Dans l'exemple de réalisation considéré sur la figure 1, le dispositif de pinçage-formage 3 comporte ainsi huit paires d'outils, quatre d'entre elles étant respectivement associées aux quatre joncs 2 alimentant le dispositif de pinçage-formage. Ci-après, on décrit en détail successivement l'outil 100 et l'outil 200, avant de décrire l'agencement relatif entre ces outils 100 et 200.

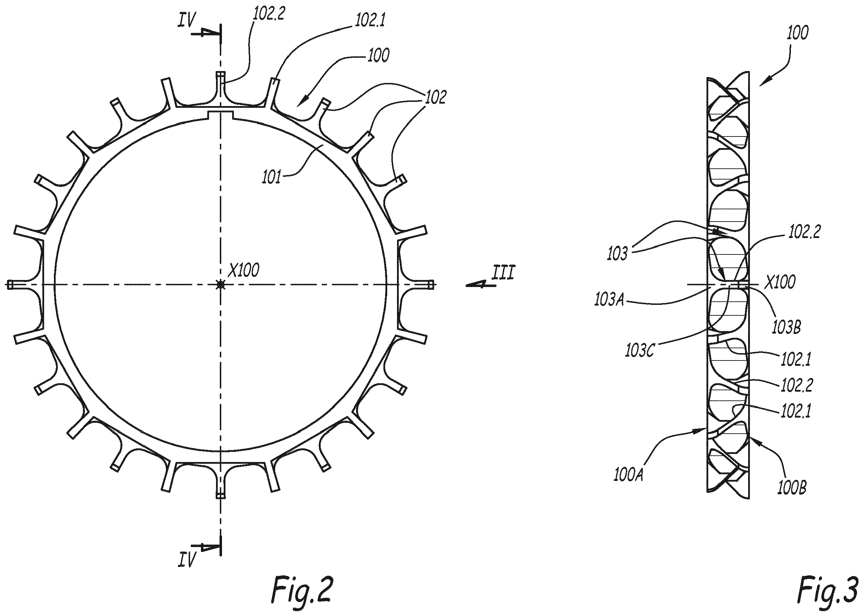

L'outil 100, qui est représenté seul sur les figures 2 à 4, présente une forme globalement cylindrique, centrée sur un axe X100. Plus précisément, l'outil 100 comporte un corps annulaire 101, à base circulaire et centré sur l'axe X100. Le corps annulaire 101 est adapté pour être rapporté solidairement à l'un des rouleaux inférieurs 10, de manière à aligner l'axe X100 avec l'axe X10 et de manière à lier en rotation l'outil 100 avec le rouleau inférieur 10 : les aménagements correspondants du corps annulaire 101 ne sont pas limitatifs de l'invention, ces aménagements pouvant par exemple être prévus sur la face intérieure du corps annulaire 101.

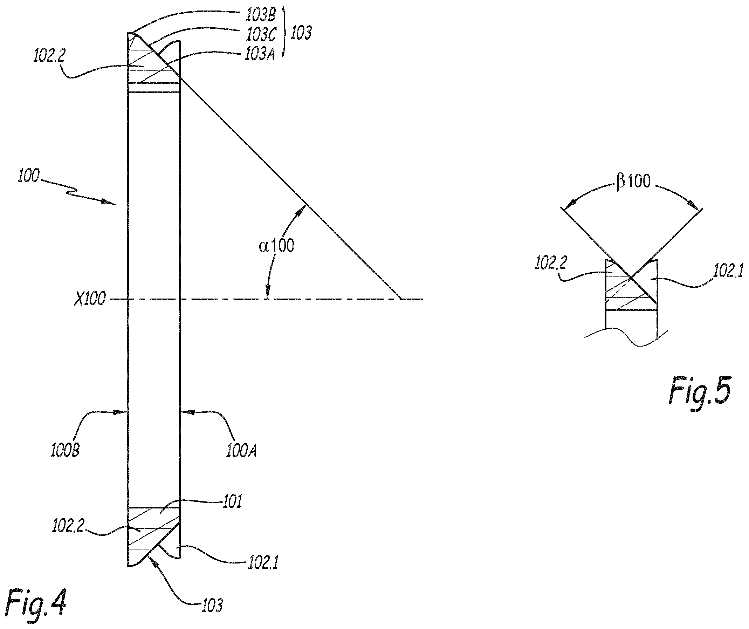

L'outil 100 comporte également, sur sa périphérie extérieure, des lamelles 102 radialement saillantes. Comme bien visible sur les figures 2 et 4, chacune des lamelles 102 s'étend depuis le corps annulaire 101, en étant en saillie, radialement à l'axe X100, de la face extérieure de ce corps annulaire 101. Les lamelles 102, qui, dans l'exemple considéré ici, sont au nombre de vingt-quatre, sont successivement réparties autour de l'axe X100, avantageusement de manière régulière. A l'opposé de sa zone de jonction avec le corps annulaire 101, chaque lamelle 102 présente un bord libre, qui est radialement opposé à l'axe X100 et qui ménage une surface de pincement 103. Comme bien visible sur les figures 3 et 4, chaque surface de pincement 103 inclut deux extrémités 103A et 103B, qui sont opposées l'une à l'autre suivant l'axe X100 et qui sont reliées l'une à l'autre par une partie courante 103C de la surface de pincement 103, étant remarqué que les extrémités respectives 103A de toutes les surfaces de pincement 103 sont situées sur un même côté axial 100A de l'outil 100 tandis que les extrémités respectives 103B de toutes les surfaces de pincement 103 sont situées sur un même côté axial 100B de l'outil 100, opposé au côté axial 100A suivant l'axe X100. Comme bien visible sur les figures 3 et 4, les extrémités respectives 103A de toutes les surfaces de pincement 103 sont toutes situées à un même niveau de l'axe X100, tandis que les extrémités respectives 103B de toutes les surfaces de pincement 103 sont toutes situées à un même niveau de l'axe X100. Autrement dit, un premier plan géométrique, perpendiculaire à l'axe X100, passe par toutes les extrémités respectives 103A de toutes les surfaces de pincement 103, et un second plan géométrique, perpendiculaire à l'axe X100 et décalé axialement du premier plan précité, passe par toutes les extrémités respectives 103B de toutes les surfaces de pincement 103.

Comme bien visible sur les figures 3 et 4, les parties courantes respectives 103C des surfaces de pincement 103 ne sont pas parallèles à l'axe X100, mais sont inclinées par rapport à cet axe. En d'autres termes, chaque surface de pincement 103 s'étend, entre ses extrémités 103A et 103B, de manière inclinée par rapport à l'axe X100, en formant avec ce dernier un angle d'inclinaison noté α100 sur la figure 4. Dans l'exemple de réalisation considéré ici, l'angle α100 vaut 45° mais, pour des raisons qui apparaîtront plus loin, cette valeur de 45°, qui peut être préférentielle, n'est pas limitative, la valeur de l'angle α100 pouvant avantageusement être comprise entre 30° et 60°.

De plus, comme bien visible sur les figures 2 et 3, l'orientation de l'inclinaison des surfaces de pincement 103 n'est pas la même pour toutes les lamelles 102, mais alterne d'une lamelle à l'autre autour de l'axe X100. En d'autres termes, les lamelles 102 sont réparties de manière alternée, suivant la périphérie extérieure de l'outil 100, entre des lamelles 102.1, dont chaque surface de pincement 103 a son extrémité 103A qui est plus éloignée radialement de l'axe X100 que son extrémité 103B, et des lamelles 102.2, dont chaque surface de pincement 103 a son extrémité 103B qui est plus éloignée radialement de l'axe X100 que son extrémité 103A. Ainsi, suivant la périphérie extérieure de l'outil 100, une des lamelles 102.1, dont la surface de pincement 103 s'incline vers l'axe X-X lorsqu'elle est parcourue de son extrémité 103A à son extrémité 103B, succède à une des lamelles 102.2, dont la surface de pincement 103 s'incline vers l'axe X100 lorsqu'elle est parcourue de son extrémité 103B à son extrémité 103A, et ainsi de suite. Cela revient à dire que l'angle α100 associé aux lamelles 102.1 est, en quelque sorte, de signe opposé à l'angle α100 associé aux lamelles 102.2. Dans l'exemple de réalisation considéré sur les figures, les lamelles 102.1 sont au nombre de douze et sont identiques les unes aux autres, et les lamelles 102.2 sont au nombre de douze et sont identiques les unes aux autres, l'angle α100 associé aux lamelles 102.1 ayant la même valeur absolue que l'angle α100 associé aux lamelles 102.2.

L'alternance de l'inclinaison des surfaces de pincement 103 implique que la surface de pincement 103 de chacune des lamelles 102.1 est décalée angulairement par rapport à la surface de pincement 103 de chacune des lamelles 102.2, comme illustré schématiquement à la figure 5 sur laquelle sont superposées une des lamelles 102.1, dessinée en traits pleins en coupe dans un plan contenant l'axe X100 et passant par cette lamelle 102.1, et une des lamelles 102.2, dessinée partiellement en traits pointillés en coupe dans un plan contenant l'axe X100 et passant par cette lamelle 102.2. L'angle de décalage entre les surfaces de pincement respectives 103 de chaque lamelle 102.1 et de chaque lamelle 102.2 est noté β100 sur la figure 5. Dans l'exemple de réalisation considéré ici, l'angle β100 vaut 90° mais, pour des raisons qui apparaîtront plus loin, cette valeur de 90°, qui peut être préférentielle, n'est pas limitative, la valeur de l'angle β100 pouvant avantageusement être comprise entre 45° et 110°.

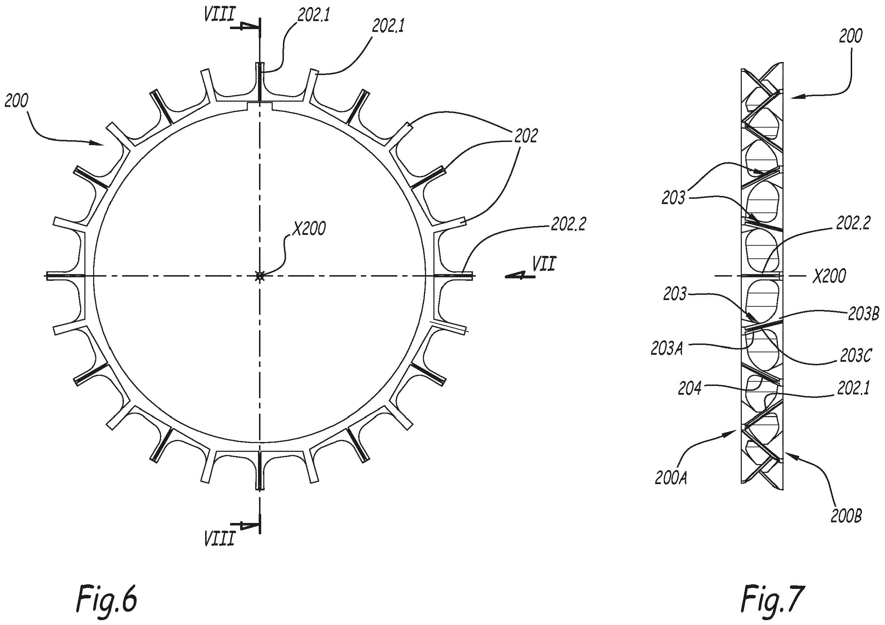

L'outil 200, qui est représenté seul sur les figures 6 à 9, peut être décrit en des termes rigoureusement identiques à ceux utilisés pour décrire l'outil 100. Dès lors, la description de l'outil 200 va être raccourcie, en renvoyant à la description détaillée ci-dessus de l'outil 100.

En particulier, l'outil 200 présente une forme globalement cylindrique, centrée sur un axe X200, et présente deux côtés axiaux opposés 200A et 200B. L'outil 200 comporte un corps annulaire 201, qui est structurellement identique au corps annulaire 101 mais qui diffère fonctionnellement de ce dernier dans le sens où le corps annulaire 201 est adapté pour être rapporté et lié en rotation à l'un des rouleaux supérieurs 20 du dispositif de pinçage-formage 3, en alignant l'axe X200 avec l'axe X20. De plus, la périphérie extérieure de l'outil 200 est pourvue d'une succession de lamelles 202 qui sont structurellement similaires aux lamelles 102 : chacune des lamelles 202 ménage, sur son bord libre radialement opposé à l'axe X200, une surface de pincement 203 dont la partie courante 103C, reliant ses extrémités 203A et 203B opposées l'une à l'autre suivant l'axe X200, s'étend de manière inclinée par rapport à l'axe X200, en formant avec ce dernier un angle d'inclinaison α200. De plus, comme pour les lamelles 102, les lamelles 202 sont réparties en des lamelles 202.1 et 202.2, qui alternent suivant la périphérie extérieure de l'outil 200 et dont les surfaces de pincement respectives 103 sont inclinées respectivement suivant des orientations opposées : les extrémités respectives 203A des surfaces de pincement 203 des lamelles 202.1 sont plus éloignées radialement de l'axe X200 que l'extrémité 203B des surfaces de pincement 203 de ces lamelles 202.1, tandis que les extrémités respectives 203B des surfaces de pincement 203 des lamelles 202.2 sont plus éloignées radialement de l'axe X200 que les extrémités respectives 203A des surfaces de pincement 203 de ces lamelles 202.2, étant remarqué que les extrémités 203A de toutes les lamelles 202 sont situées sur le côté axial 200A de l'outil 200 tandis que les extrémités 203B de toutes les lamelles 202 sont situées sur le côté axial 200B de cet outil.

Les considérations développées plus haut quant à la valeur possible de l'angle d'inclinaison α100 s'appliquent à l'angle d'inclinaison α200. De même, les considérations développées plus haut pour l'angle de décalage β100 s'appliquent à un angle de décalage similaire pour les lamelles 200, qui n'est pas représenté sur les figures mais qui résulte du décalage angulaire entre la surface de pincement 203 de chacune des lamelles 202.1 et la surface de pincement 203 de chacune des lamelles 202.2.

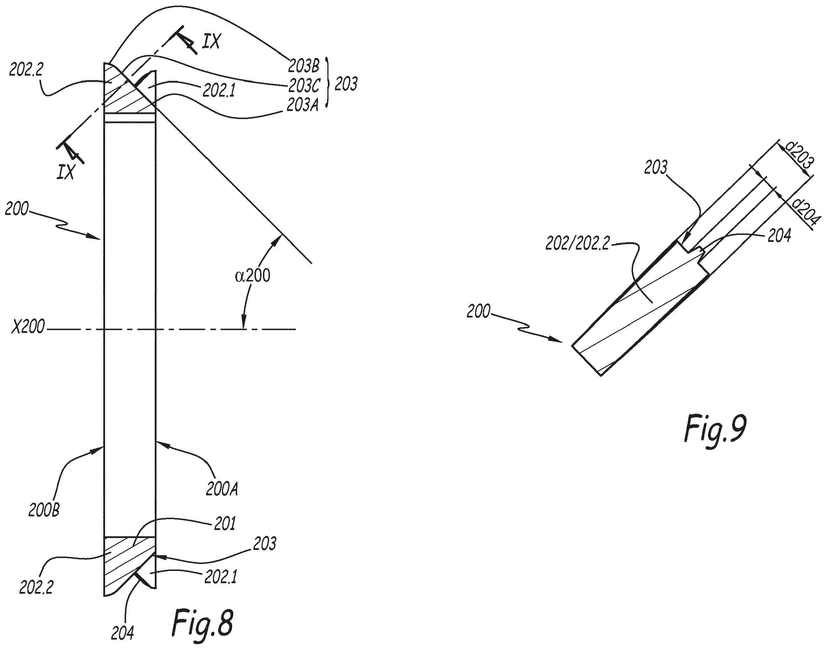

Dans l'exemple de réalisation considéré ici, l'outil 200 se distingue de l'outil 100 par un aménagement optionnel avantageux, à savoir que chacune des lamelles 202 est pourvue d'une nervure 204 qui, comme bien visible sur les figures 7 à 9, est en saillie radiale de la surface de pincement correspondante 203. Chaque nervure 204 s'étend en longueur entre les extrémités 203A et 203B de la surface de pincement correspondante 203, sans recouvrir en totalité cette surface de pincement 203 mais en présentant une dimension orthoradiale à l'axe X200, notée d204 sur la figure 9, qui est inférieure à la dimension orthoradiale, notée d203, de la surface de pincement 203 : en pratique, notamment pour que l'effet de pincement procuré par les surfaces de pincement 203 reste efficace en présence des nervures 204, la dimension d204 des nervures 204 est limitée, en étant typiquement égale ou inférieure à la moitié de la dimension d203, et les nervures 204 occupent, sur la surface de pincement correspondante 203, une position médiane suivant une direction orthoradiale à l'axe 200.

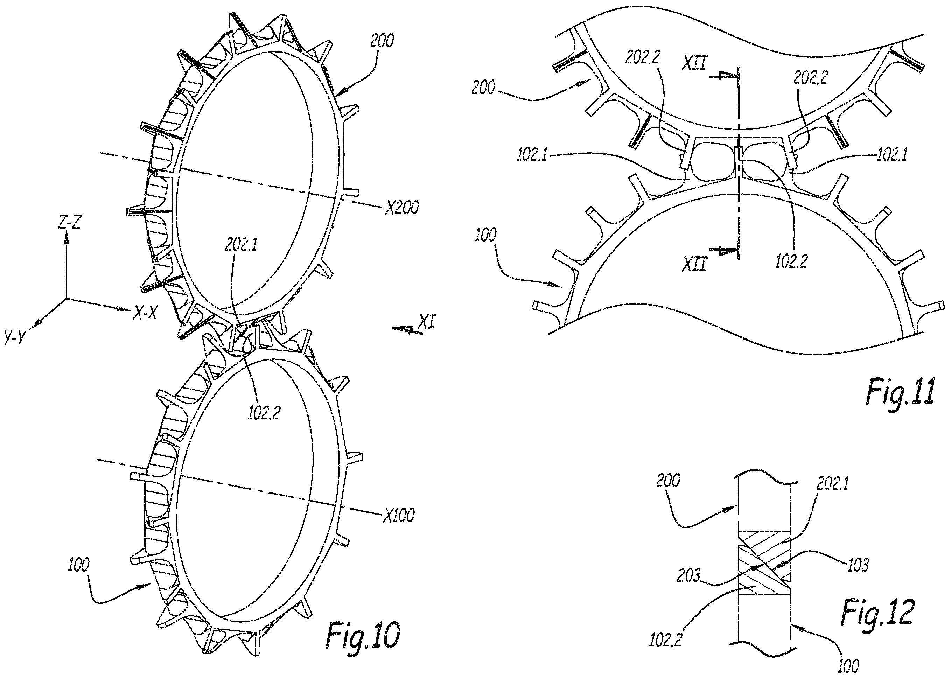

Comme indiqué plus haut, les outils 100 et 200 sont associés en une paire au sein du dispositif de pinçage-formage 3 : cette paire est représentée seule sur les figures 10 à 12, et ce dans sa configuration fonctionnelle au sein du dispositif de pinçage-formage 3. Comme bien visible sur les figures 10 à 12, les outils 100 et 200 sont alors agencés de manière que les axes X100 et X200 sont parallèles l'un à l'autre, ainsi qu'alignés l'un avec l'autre suivant la direction de l'axe Z-Z, ce qui résulte de leur assemblage respectif aux rouleaux 10 et 20. De plus, les périphéries extérieures respectives des outils 100 et 200 se retrouvent appliquées tangentiellement l'une contre l'autre de façon que les lamelles 102 et 202 puissent coopérer les unes avec les autres pour pincer-former le jonc 2 introduit tangentiellement entre les outils 100 et 200 lorsque ces derniers sont entraînés en rotation dans des sens respectifs opposés. Plus précisément, les outils 100 et 200 sont conçus de manière que, à chaque fois qu'une des lamelles 102 ou 202 de l'un des outils 100 et 200 se trouve radialement interposée entre les deux outils lors de la rotation de ces derniers autour de leurs axes X100 et X200, comme cela est illustré aux figures 10 à 12, cette lamelle 102 ou 202 est alignée radialement avec une des lamelles 202 ou 102 de l'autre outil, cette lamelle 202 ou 102 de l'autre outil ayant sa surface de pincement 203, 103 inclinée qui est prévue complémentaire de la surface de pincement 103, 203 de la lamelle 102 ou 202 de l'outil 100 ou 200. On comprend que, pour les outils 100 et 200 considérés ici, cela implique que, dès lors que les côtés axiaux respectifs 100A et 200A des outils 100 et 200 sont tournés du même côté suivant l'axe X-X au sein du dispositif de pinçage-formage 3, chacune des lamelles 102.1 de l'outil 100 se retrouve, lors de la rotation des outils, alignée radialement avec une des lamelles 202.2 de l'outil 200 et chacune des lamelles 102.2 de l'outil 100 se retrouve, lors de la rotation des outils, alignée radialement avec l'une des lamelles 202.1 de l'outil 200, les angles α100 et β100 étant prévus complémentaires l'un de l'autre.

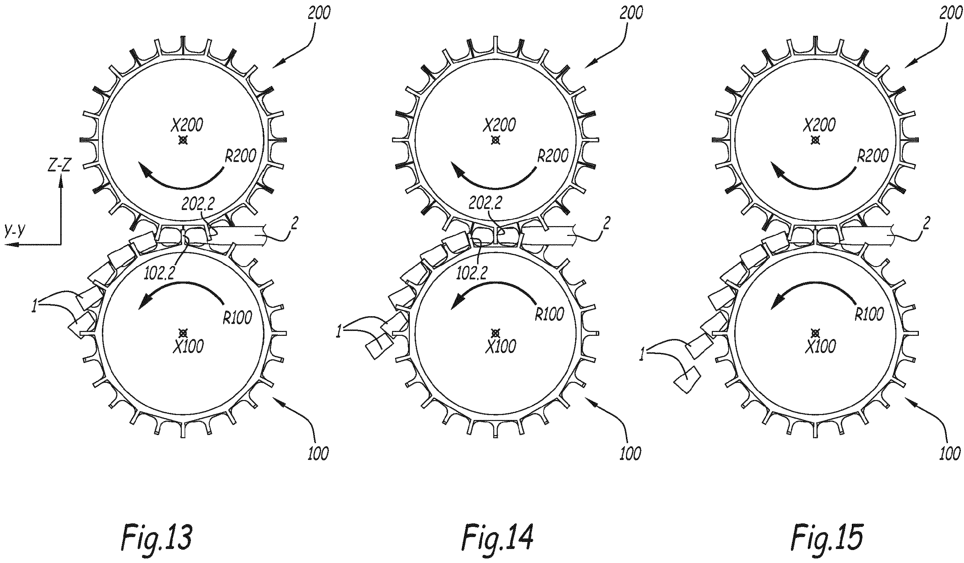

Cet agencement des outils 100 et 200 permet de conformer en berlingot le jonc 2 introduit tangentiellement entre les outils 100 et 200, comme illustré par les figures 13 à 15. En effet, à l'étape de fonctionnement illustré à la figure 13, les lamelles respectives des outils 100 et 200 qui sont radialement interposées entre ces outils sont une des lamelles 202.1 et une des lamelles 102.2 : cette lamelle 202.1 et cette lamelle 102.2 sont alignées radialement l'une avec l'autre et les surfaces de pincement 203 et 103 respectives de ces lamelles 202.1 et 102.2, qui sont inclinées de manière complémentaire l'une à l'autre, pincent alors entre elles le jonc 2 selon une première ligne de pincement inclinée par rapport aux axes X100 et X200. Moyennant l'entraînement rotatif des outils 100 et 200, comme indiqué par les flèches R100 et R200 sur les figures 13 à 15, les outils 100 et 200 passent de la configuration illustrée à la figure 13 à la configuration illustrée à la figure 14 : entre les figures 13 et 14, le jonc 2 a progressé selon l'axe Y-Y vers la sortie du dispositif de pinçage-formage 3 et, dans le même temps, les lamelles 202.1 et 102.2 qui pinçaient entre elles le jonc à l'étape de la figure 13 ont été écartées l'une de l'autre tandis que, dans le même temps, la lamelle suivante de l'outil 200, c'est-à-dire l'une des lamelles 202.2, et la lamelle suivante de l'outil 100, c'est-à-dire l'une des lamelles 102.1, se retrouvent, à l'étape illustrée à la figure 14, alignées radialement l'une avec l'autre, avec leur surface de pincement 103 et 203, inclinées de manière complémentaire l'une à l'autre, qui pincent entre elles le jonc 2 selon une seconde ligne de pincement, qui est distincte de la première ligne de pincement précitée et qui est inclinée par rapport aux axes X100 et X200, en étant décalée angulairement par rapport à la première ligne de pincement précitée. En tenant compte des explications données jusqu'ici, on comprend que le décalage angulaire entre les deux lignes de pincement précitées du jonc 2 dépend directement de l'angle de décalage β100 entre les deux lamelles 102.2 et 102.1 impliquées dans le pincement du jonc 2, et donc de l'angle de décalage similaire entre les lamelles 202.1 et 202.2 impliquées dans le pincement du jonc, étant toutefois remarqué que, en pratique, le décalage angulaire entre les deux lignes de pincement précitées du jonc 2 peut être influencé par une éventuelle torsion du jonc 2 sur lui-même lors de des pincements successifs. Dans tous les cas, en jouant sur les angles de décalage entre les lamelles des outils 100 et 200, le décalage angulaire entre les deux lignes de pincement précitées du jonc 2 peut être maîtrisé pour soit décaler ces deux lignes de pincement rigoureusement à 90°, et ainsi obtenir une forme de berlingot « traditionnelle », soit décaler ces deux lignes de pincement de moins de 90°, pour obtenir une forme de berlingot légèrement différente de la forme traditionnelle. Bien entendu, la forme de berlingot précisément obtenue dépend également des angles d'inclinaison α100 et α200 des lamelles 102 et 202 puisque ces angles d'inclinaison conditionnent l'inclinaison de chacune des deux lignes de pincement précitées par rapport aux axes X100 et X200 lors de la formation de ces lignes de pincement. D'ailleurs, plutôt que l'angle d'inclinaison α100, α200 de chaque outil 100, 200 ait une même valeur pour toutes les surfaces de pincement 103 et 203 de l'outil, comme c'est le cas pour les outils 100 et 200 considérés plus haut, cet angle d'inclinaison peut changer de valeur entre les surfaces de pincement respectives de deux lamelles successives, là encore pour influer sur la forme de berlingot finalement obtenue.

Dans tous les cas, on comprend qu'à l'étape illustrée à la figure 14, la partie du jonc 2, délimitée entre les deux lignes de pincement précitées, forme l'un des produits en forme de berlingot 1. Puis, comme illustré par la figure 15, la poursuite de l'entraînement en rotation des outils 100 et 200 conduit à la formation d'un autre des produits en forme de berlingot 1 à partir du jonc 2, avec obtention d'une nouvelle ligne de pincement du jonc entre les surfaces de pincement respectives 103 et 203 d'une des lamelles 102.2 et d'une des lamelles 202.1 .

Avantageusement, lors de la formation de chacune des lignes de pincement du jonc 2 entre les surfaces de pincement 103 et 203 des lamelles 102 et 202, la nervure 204 des lamelles 202 agit sur le jonc 2 au niveau de la ligne de pincement considérée : selon les spécificités géométriques précises de la nervure 204, cette dernière peut pincer plus fortement le jonc 2 et/ou réaliser partiellement voire totalement un découpage transversal du jonc 2. Les produits en forme de berlingot 1 peuvent alors être plus facilement individualisés, notamment en se séparant les uns des autres par écartement des bords de la prédécoupe ou de la découpe ainsi obtenue grâce aux nervures 204. On comprend au passage que, à titre de variante non représentée, ces nervures peuvent ne pas être prévues que sur un seul des deux outils 100 et 200, mais être réparties entre ces deux outils ou bien être prévues sur toutes les lamelles des deux outils.

A titre d'options avantageuses, le dispositif de pinçage-formage 3 comporte par ailleurs des aménagements visant à améliorer ou faciliter le dégagement vis-à-vis des outils 100 et 200 des produits en forme de berlingot 1 une fois la conformation de ces derniers réalisée par ces outils.

Un premier de ces aménagements consiste à émousser l'extrémité de chacune des surfaces de pincement 103 et 203, la plus éloignée de l'axe X100 ou X200 de l'outil concerné 100 ou 200. Ainsi, comme envisagé dans l'exemple de réalisation considéré sur les figures, et comme plus particulièrement visible sur les figures 3, 4, 7 et 8, sont émoussées à la fois les extrémités respectives 103A des surfaces de pincement 103 des lamelles 102.1, les extrémités respectives 103B des surfaces de pincement 103 des lamelles 102.2, les extrémités respectives 203A des surfaces de pincement 203 des lamelles 202.1 et les extrémités respectives 203B des surfaces de pincement 203 des lamelles 202.2.

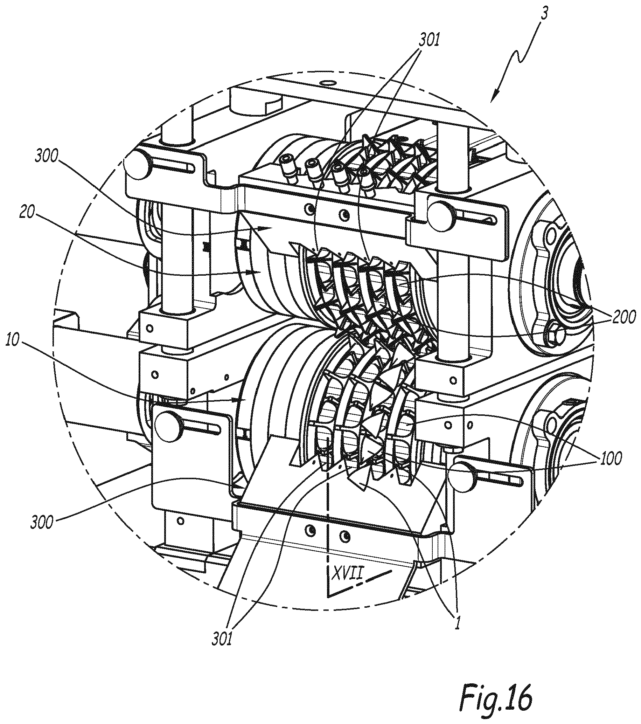

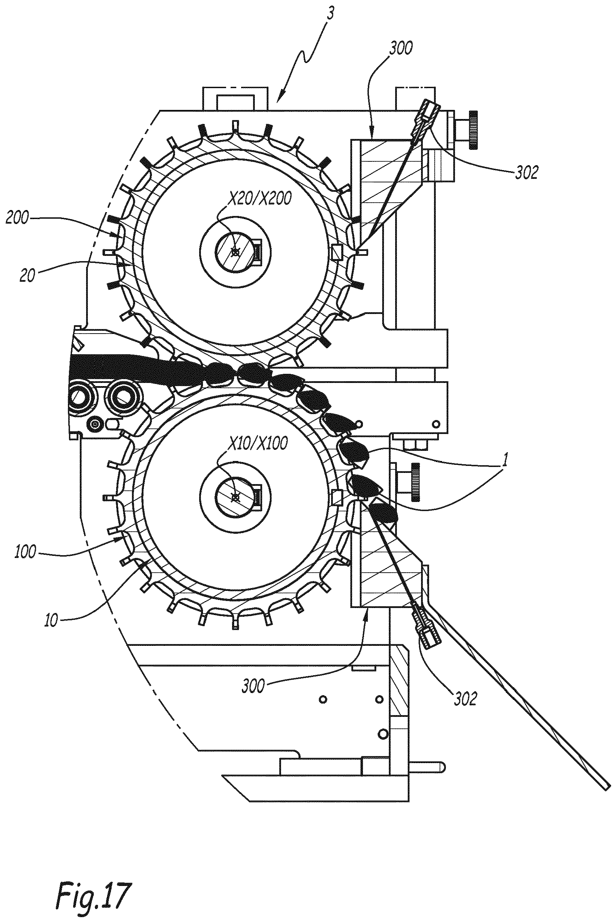

Un deuxième aménagement possible est illustré par les figures 16 et 17 sur lesquelles le dispositif de pinçage-formage 3 est complété avec des racleurs 300 agencés du côté des rouleaux 10 et 20 tourné, selon l'axe Y-Y, vers la sortie du dispositif de pinçage-formage 3. Chaque racleur 300 est conçu pour racler la périphérie extérieure des outils 100 ou 200, par balayage de cette périphérie extérieure contre le racleur lors de la rotation des outils 100 et 200. En pratique, sur sa face tournée vers l'outil correspondant 100 ou 200, chaque racleur 300 délimite des ouvertures traversantes 301 pour le passage tangentiel des lamelles 102 ou 202, ces ouvertures 301 étant conçues pour éviter toute interférence bloquante entre le racleur 300 et l'outil correspondant 100 ou 200. De plus, chaque racleur 300 intègre des buses de soufflage 302, chaque buse de soufflage 302 étant associée à l'outil 100 ou 200 contre lequel est agencé le racleur 300 : chacune de ces buses de soufflage 302 est adaptée pour projeter un flux gazeux, typiquement un flux d'air comprimé, à la fois tangentiellement à la périphérie extérieure de l'outil correspondant 100 ou 200 et transversalement aux lamelles 102 ou 202 de cet outil, comme bien visible sur la figure 17. Dès lors qu'un des produits en forme de berlingot 1 ne se dégagerait pas ou pas suffisamment de l'un des outils 100 ou 200, le flux gazeux projeté par les buses de soufflage 302 agit sur ce produit en forme de berlingot 1 pour le « soulever » de la périphérie extérieure de l'outil et, si besoin était, ce produit en forme de berlingot 1 viendra interférer physiquement avec le racleur 300 pour le dégager totalement de l'outil.

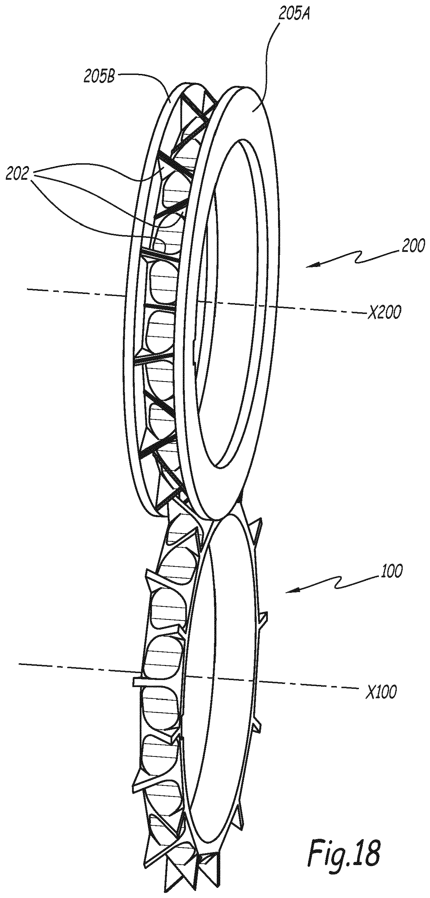

Un troisième aménagement possible, qui est illustré à la figure 18, consiste à rajouter, sur chacun des côtés axiaux de l'un et/ou l'autre des outils 100 et 200, un flasque latéral à même de border les extrémités axiales correspondantes des surfaces de pincement des lamelles de l'outil sur toute la périphérie extérieure de ce dernier. Ainsi, dans l'exemple envisagé à la figure 18, l'outil 200 est pourvu d'une part, sur son côté axial 200A, d'un flasque latéral 205A qui borde les extrémités respectives 203A des surfaces de pincement 203 des lamelles 202 sur toute la périphérie extérieure de l'outil 200 et, d'autre part, sur son côté axial 200B, d'un flasque 205B qui borde les extrémités respectives 203B des surfaces de pincement 203 des lamelles 202 sur toute la périphérie extérieure de l'outil 200. Ces flasques latéraux, tels que les flasques 205A et 205B de l'outil 200 de la figure 18, renforcent le guidage du jonc 2 lors de son introduction tangentielle entre les outils 100 et 200 et lors du pincement du jonc par les lamelles de ces outils, en contrecarrant ainsi un désalignement du jonc et des surfaces de pincement 103 et 203 suivant la direction de l'axe X-X et donc en limitant le risque de coincement des produits en forme de berlingot 1 qui résulterait de leur mauvais positionnement transversalement à la périphérie extérieure des outils en sortie du dispositif de pinçage-formage 3.

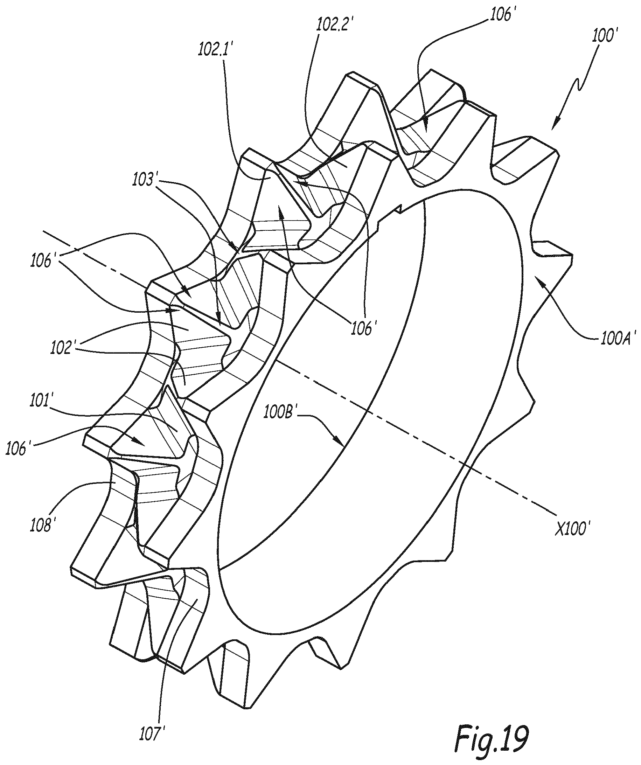

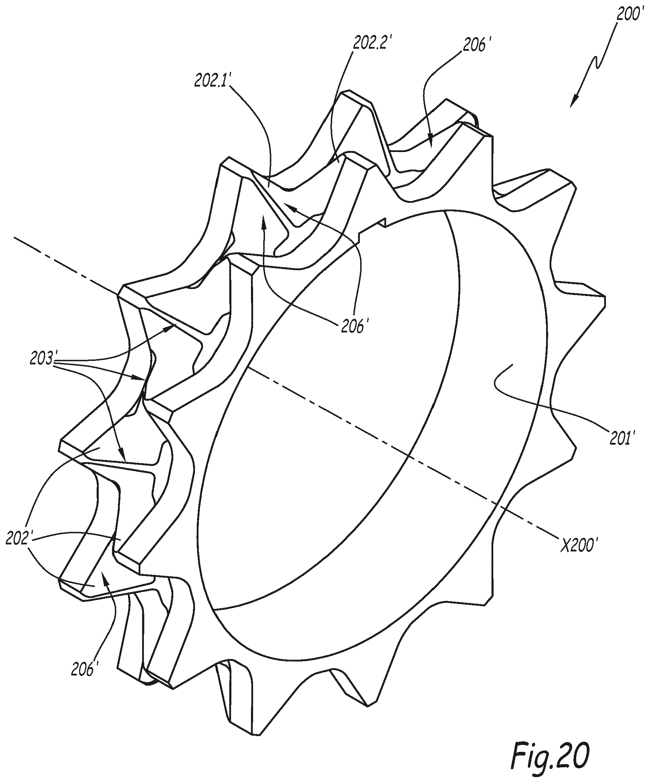

Un quatrième aménagement possible est illustré par les figures 19 et 20 qui représentent respectivement une variante de l'outil 100, référencée 100', et une variante de l'outil 200, référencée 200'. L'outil 100' comporte un corps annulaire 101', des lamelles 102' et des surfaces de pincement 103', qui sont respectivement similaires fonctionnellement au corps annulaire 101, aux lamelles 102 et aux surfaces de pincement 103 de l'outil 100. Le corps annulaire 101' est centré sur un axe X100' similaire à l'axe X100 de l'outil 100. Les lamelles 102' sont réparties et alternent, suivant la périphérie extérieure de l'outil 100', entre des lamelles 102.1' et des lamelles 102.2', qui sont respectivement similaires fonctionnellement aux lamelles 102.1 et 102.2 de l'outil 100. De la même façon, l'outil 200' comporte un corps annulaire 201', des lamelles 202' et des surfaces de pincement 203', qui sont respectivement similaires fonctionnellement au corps annulaire 201, aux lamelles 202 et aux surfaces de pincement 203 de l'outil 200. Le corps annulaire 201' est centré sur un axe X200' similaire à l'axe X200 de l'outil 200. Les lamelles 202' sont réparties et alternent, suivant la périphérie extérieure de l'outil 200', entre des lamelles 202.1' et des lamelles 202.2', qui sont respectivement similaires fonctionnellement aux lamelles 202.1 et 202.2 de l'outil 200. De plus, les outils 100' et 200' sont associés l'un à l'autre en une paire, de la même façon que détaillée plus haut pour les outils 100 et 200.

Comme bien visible sur la figure 19, chacune des lamelles 102' présente deux flancs 106' qui sont situés de part et d'autre, suivant une direction orthoradiale à l'axe X100', de la lamelle 102'. A la différence des flancs de chacune des lamelles 102, qui s'étendent à une distance constante l'un de l'autre pour sensiblement toute la lamelle 102, les flancs 106' de chaque lamelle 102' divergent progressivement l'un de l'autre à la fois lorsque la lamelle 102' est parcourue radialement depuis sa surface de pincement 103' vers l'axe X100', voire jusqu'au corps annulaire 101', et lorsque la lamelle 102' est parcourue axialement depuis l'extrémité de sa surface de pincement 103', la moins éloignée radialement de l'axe X100', jusqu'à l'extrémité de sa surface de pincement 103', la plus éloignée radialement de l'axe X100'. De la même façon, comme bien visible sur la figure 20, chacune des lamelles 202' présente deux flancs 206', qui sont situés de part et d'autre de la lamelle suivant une direction orthoradiale à l'axe X200' et qui divergent progressivement l'un de l'autre à la fois lorsque la lamelle 202' est parcourue radialement depuis sa surface de pincement 203' vers l'axe X200', voire jusqu'au corps annulaire 201', et lorsque la lamelle 202' est parcourue axialement depuis l'extrémité de sa surface de pincement 203', la moins éloignée radialement de l'axe X200', jusqu'à l'extrémité de sa surface de pincement 203', la plus éloignée radialement de l'axe X200'.

Ainsi, chacune des lamelles 102' et 202' présente globalement une forme pyramidale. Cette forme pyramidale renforce mécaniquement les lamelles et fait que les flancs 106' et 206' assurent une tenue en position du jonc 2 lors de son pinçage-formage entre les outils 100' et 200', au niveau de la partie de ce jonc 2 située entre les deux lignes de pincement de la forme en berlingot. Les flancs 106' et 206' permettent ainsi d'auto-centrer le jonc 2 vis-à-vis des lamelles 102' et 202' lorsque, par paires, ces dernières se rapprochent l'une de l'autre jusqu'à pincer le jonc 2.

Par ailleurs, dans la variante relative à l'outil 100' illustrée à la figure 19, le corps annulaire 101' est, comparativement au corps annulaire 101 de l'outil 100, prolongé axialement de part et d'autre des lamelles 102'. Comme bien visible sur la figure 19, l'outil 100' comporte à cet effet, sur chacun de ses côtés axiaux opposés 100A' et 100B', une couronne latérale 107', respectivement 108', qui prolonge axialement le corps annulaire 101. La face extérieure de la couronne latérale 107' est inscrite dans le prolongement axial des extrémités axiales des languettes 102', situées sur le côté axial 100A' de l'outil 100'. La face extérieure de la couronne latérale 108' est inscrite dans le prolongement axial des extrémités axiales des languettes 102', situées sur le côté axial 100B' de l'outil 100'.

Les couronnes latérales 107' et 108' renforcent l'outil 100' et confèrent ainsi à ce dernier une bonne tenue mécanique, même lorsque l'outil 100' est fabriqué en une matière plastique, sans pour autant que la présence de ces couronnes latérales 107' et 108' n'affecte les effets des lamelles 102' pour le pinçage-formage du jonc 2.

Bien entendu, les couronnes latérales 107' et 108' qui viennent d'être décrites pour l'outil 100' peuvent être prévues pour l'outil 100.

Divers aménagements et variantes au dispositif de pinçage-formage 3 sont par ailleurs envisageables :
- dans l'exemple considéré sur les figures, les surfaces de pincement 103 et 203 des lamelles 102 et 202 sont sensiblement planes dans le sens où la partie courante 103C, 203C de ces surfaces de pincement est inscrite dans un plan géométrique ; en variante, tout ou partie de ces surfaces de pincement, en particulier la partie courante de ces dernières, peut être légèrement bombée ou légèrement en creux ;
- dans l'exemple de réalisation considéré sur les figures, les surfaces de pincement 103 et 203 des lamelles 102 et 202 présentent, lorsqu'elles sont observées suivant une direction radiale à l'axe X100, X200 de l'outil correspondant 100 ou 200, un profil rectiligne entre leurs extrémités 103A, 203A et 103B, 203B ; en variante, ce profil peut être légèrement incurvé ; et/ou
- la face extérieure du corps annulaire 101, 201 des outils 100 et 200 peut présenter, entre les lamelles 102, 202, des aménagements de forme destinés à interférer par contact avec le jonc 2 lors du pincement de ce dernier, en particulier avec la partie de ce jonc située entre les deux lignes de pincement de la forme en berlingot ; par interférence entre le jonc 2 et ces aménagements de forme, un effet mécanique peut alors être produit sur le jonc, par exemple un effet de blocage en torsion ou encore un effet de marquage de la surface du jonc.

Enfin, on notera que, bien que le dispositif de pinçage-formage 3 a été décrit jusqu'ici comme utilisé sur des joncs alimentaires co-extrudés, tels que les joncs 2 mentionnés plus haut, ce dispositif de pinçage-formage 3 peut être utilisé sur des joncs autres que co-extrudés, voire sur des joncs autres qu'alimentaires.

## Revendications

1. Dispositif de pinçage-formage (3), comportant au moins une paire d'outils (100, 200 ; 100', 200') cylindriques qui présentent chacun un axe central (X100, X200 ; X100', X200') autour duquel l'outil correspondant est adapté pour être entraîné en rotation,
dans lequel les outils de la ou chaque paire d'outils sont agencés de manière que les axes centraux respectifs des outils sont sensiblement parallèles et que les périphéries extérieures respectives des outils sont appliquées tangentiellement l'une contre l'autre pour pincer-former un jonc (2) introduit tangentiellement entre les outils lorsque les outils sont entraînés en rotation,
dans lequel la périphérie extérieure de chaque outil est pourvue de lamelles (102, 202 ; 102', 202') radialement saillantes, qui sont successivement réparties autour de l'axe central correspondant et qui ménagent chacune, sur leur bord libre radialement opposé à l'axe central, une surface de pincement (103, 203 ; 103', 203') s'étendant entre des première (103A, 203A) et seconde (103B, 203B) extrémités de cette surface de pincement qui sont opposées l'une à l'autre suivant l'axe central, les premières extrémités respectives des surfaces de pincement de chaque outil étant toutes situées sur un même côté axial (100A, 200A) de l'outil tandis que les secondes extrémités respectives des surfaces de pincement de chaque outil sont toutes situées sur un même second côté axial (100B, 200B) de l'outil, opposé au premier côté axial suivant l'axe central correspondant,
et dans lequel la surface de pincement de chaque lamelle de chaque outil s'étend entre sa première extrémité et sa seconde extrémité de manière inclinée par rapport à l'axe central correspondant,
**caractérisé en ce que** les lamelles (102, 202 ; 102', 202') de chaque outil (100, 200 ; 100', 200') sont réparties de manière alternée, suivant la périphérie extérieure de l'outil, entre au moins une première lamelle (102.1, 202.1 ; 102.1' ; 201.1'), dont la surface de pincement a sa première extrémité qui est plus éloignée radialement de l'axe central correspondant (X100, X200 ; X100', X200') que sa seconde extrémité, et au moins une seconde lamelle (102.2, 202.2 ; 102.2', 202.2'), dont la surface de pincement a sa seconde extrémité qui est plus éloignée radialement de l'axe central correspondant que sa première extrémité, de manière que, à chaque fois qu'une des lamelles d'un premier des deux outils de la ou chaque paire d'outils se trouve radialement interposée entre les deux outils lors de la rotation des deux outils autour de leur axe central, cette lamelle du premier outil est alignée radialement avec une des lamelles du second outil, dont la surface de pincement est inclinée de manière complémentaire à la surface de pincement de cette lamelle du premier outil, pour pincer entre les surfaces de pincement respectives de ces deux lamelles alignées un jonc (2) introduit tangentiellement entre les deux outils.

2. Dispositif de pinçage-formage suivant la revendication 1, **caractérisé en ce que** la surface de pincement (103, 203 ; 103', 203') de chaque lamelle (102, 202 ; 102, 202') de chaque outil (100, 200 ; 100', 200') s'étend entre sa première extrémité (103A, 203A) et sa seconde extrémité (103B, 203B) en formant avec l'axe central correspondant (X100, X200 ; X100', X200') un angle d'inclinaison (α100, α200) qui est compris entre 30° et 60°.

3. Dispositif de pinçage-formage suivant la revendication 2, **caractérisé en ce que** l'angle d'inclinaison (α100, α200) est égal à 45°.

4. Dispositif de pinçage-formage suivant l'une des revendications 2 ou 3, **caractérisé en ce que** pour chaque outil (100, 200 ; 100', 200'), l'angle d'inclinaison (α100, α200) a une même valeur pour toutes les surfaces de pincement (103, 203 ; 103', 203') de l'outil.

5. Dispositif de pinçage-formage suivant la revendication 2, **caractérisé en ce que** pour chaque outil, l'angle d'inclinaison change de valeurs entre les surfaces de pincement respectives de deux lamelles successives.

6. Dispositif de pinçage-formage suivant l'une quelconque des revendications précédentes, **caractérisé en ce que** pour chaque outil (100, 200 ; 100', 200'), les surfaces de pincement respectives (103, 203 ; 103', 203') de deux lamelles successives (102, 202 ; 102', 202') sont décalées angulairement l'une par rapport à l'autre d'un angle de décalage (β100) qui est compris entre 45° et 110°.

7. Dispositif de pinçage-formage suivant la revendication 6, **caractérisé en ce que** l'angle de décalage (β100) est égal à 90°.

8. Dispositif de pinçage-formage suivant l'une quelconque des revendications précédentes, **caractérisé en ce que** chaque lamelle (202) de l'un et/ou l'autre des outils (100, 200) de la ou chaque paire d'outils est pourvue d'une nervure (204), qui est en saillie radiale de la surface de pincement correspondante (203), qui présente une dimension orthoradiale (d204) inférieure à la dimension orthoradiale (d203) de la surface de pincement, et qui s'étend entre les première (203A) et seconde (203B) extrémités de la surface de pincement.

9. Dispositif de pinçage-formage suivant l'une quelconque des revendications précédentes, **caractérisé en ce que** chaque surface de pincement (103, 203) a son extrémité, parmi ses première (103A, 203A) et seconde (103B, 203B) extrémités, la plus éloignée radialement de l'axe central correspondant (X100, X200), qui est émoussée.

10. Dispositif de pinçage-formage suivant l'une quelconque des revendications précédentes, **caractérisé en ce que** le dispositif de pinçage-formage (3) comporte en outre au moins un racleur (300), qui est adapté pour racler la périphérie extérieure d'un des outils (100, 200) de la ou chaque paire d'outils et qui intègre au moins une buse de soufflage (302) agencée pour projeter un flux gazeux à la fois tangentiellement à la périphérie extérieure de l'outil et transversalement aux lamelles (102, 202) de cet outil.

11. Dispositif de pinçage-formage suivant l'une quelconque des revendications précédentes, **caractérisé en ce qu'**au moins un des outils (100, 200) de la ou chaque paire d'outils est pourvu :
- sur son premier côté axial (200A), d'un premier flasque latéral (205A) qui borde les premières extrémités respectives (203A) des surfaces de pincement (203) de l'outil correspondant (200) sur toute la périphérie extérieure de cet outil, et
- sur son second côté axial (200B), d'un second flasque latéral (205B) qui borde les secondes extrémités respectives (203B) des surfaces de pincement de l'outil correspondant sur toute la périphérie extérieure de l'outil.

12. Dispositif de pinçage-formage suivant l'une quelconque des revendications précédentes, **caractérisé en ce que** chacune des lamelles (102', 202') de chaque outil (100', 200') de la ou chaque paire d'outils présente deux flancs (106', 206'), qui sont situés de part et d'autre, suivant une direction orthoradiale à l'axe central correspondant (X100', X200'), de la lamelle et qui divergent progressivement l'un de l'autre à la fois lorsque la lamelle est parcourue radialement depuis sa surface de pincement (103', 203') vers l'axe central correspondant et lorsque la lamelle est parcourue axialement depuis l'extrémité de la surface de pincement, la moins éloignée radialement de l'axe central correspondant, jusqu'à l'extrémité opposée de la surface de pincement, la plus éloignée radialement de l'axe central correspondant.

13. Dispositif de pinçage-formage suivant l'une quelconque des revendications précédentes, **caractérisé en ce qu'**au moins un des outils (100', 200') de la ou chaque paire d'outils est pourvu :
- sur son premier côté axial (100A'), d'une première couronne latérale (107') dont la face extérieure est inscrite dans le prolongement axial des extrémités axiales des languettes (102') de l'outil correspondant (100'), situées sur le premier côté axial, et
- sur son second côté axial (100B'), d'une seconde couronne latérale (108') dont la face extérieure est inscrite dans le prolongement axial des extrémités axiales des languettes de l'outil correspondant, situées sur le second côté axial de l'outil correspondant.

14. Système de production en continu de produits alimentaires co-extrudés en forme de berlingot, comportant :
- une alimentation continue (4) en au moins un jonc alimentaire co-extrudé (2), et
- un dispositif de pinçage-formage (3) conforme à l'une quelconque des revendications précédentes, qui comporte autant de paire(s) d'outils (100, 200) que de jonc(s) de l'alimentation continue (4), chaque jonc étant prévu pour être introduit tangentiellement entre les périphéries extérieures respectives des outils (100, 200) de la paire d'outils correspondante.

## Patentansprüche

1. Drück-Form-Vorrichtung (3), umfassend mindestens ein Paar von zylindrischen Werkzeugen (100, 200; 100', 200'), die jeweils eine zentrale Achse (X100, X200; X100', X200') aufweisen, um die das entsprechende Werkzeug angepasst ist, um in Drehung versetzt zu werden,
wobei die Werkzeuge des oder jedes Paars von Werkzeugen derart angeordnet sind, dass die jeweiligen zentralen Achsen der Werkzeuge im Wesentlichen parallel sind, und dass die jeweiligen äußeren Umfänge der Werkzeuge tangential gegeneinander angebracht sind, um ein Rohr (2) zu drücken/formen, das tendenziell zwischen den Werkzeugen eingeführt ist, wenn die Werkzeuge in Drehung versetzt werden,
wobei der äußere Umfang jedes Werkzeugs mit Lamellen (102, 202; 102', 202') versehen ist, die radial hervorspringen, die aufeinanderfolgend um die entsprechende zentrale Achse verteilt sind, und die jeweils, auf ihrem freien Rand, der der zentralen Achse radial entgegengesetzt ist, eine Drückfläche (103, 203; 103', 203') aufweisen, die sich zwischen dem ersten (103A, 203A) und zweiten (103B, 203B) Ende dieser Drückfläche erstrecken, die einander gemäß der zentralen Achse gegenüber liegen, wobei sich die jeweiligen ersten Enden der Drückflächen jedes Werkzeugs alle auf einer gleichen axialen Seite (100A, 200A) des Werkzeugs befinden, während sich die jeweiligen zweiten Enden der Drückflächen jedes Werkzeugs alle auf einer gleichen zweiten axialen Seite (100B, 200B) des Werkzeugs befinden, die der ersten axialen Seite gemäß der entsprechenden zentralen Achse gegenüberliegt,
und wobei sich jede Drückfläche jeder Lamelle jedes Werkzeugs zwischen ihrem ersten Ende und ihrem zweiten Ende auf geneigte Weise mit Bezug auf die entsprechende zentrale Achse erstreckt,
**dadurch gekennzeichnet, dass** die Lamellen (102, 202; 102', 202') jedes Werkzeugs (100, 200; 100', 200') auf alternierende Weise gemäß dem äußeren Umfang des Werkzeugs zwischen mindestens einer ersten Lamelle (102.1, 202.1; 102.1'; 201.1'), deren Drückfläche an ihrem ersten Ende, das radial weiter von der entsprechenden zentralen Achse (X100, X200; X100', X200') als eine zweite Ende entfernt ist, und mindestens einer zweiten Lamelle (102.2, 202.2; 102.2', 202.2'), deren Drückfläche an ihrem zweiten Ende, das radial weiter von der entsprechenden zentralen Achse als ihr erstes Ende entfernt ist, verteilt sind, so dass, jedes Mal, wenn eine der Lamellen eines ersten der zwei Werkzeuge des oder jedes Paars von Werkzeugen, wenn die Drehung der zwei Werkzeuge um ihre zentrale Achse radial zwischen die zwei Werkzeuge gestellt ist, diese Lamelle des ersten Werkzeugs radial mit einer der Lamellen des zweiten Werkzeugs ausgefluchtet ist, deren Drückfläche auf komplementäre Weise zur Drückfläche dieser Lamelle des ersten Werkzeugs geneigt ist, um zwischen den entsprechenden Drückflächen dieser zwei ausgefluchteten Lamellen ein Rohr (2) zu drücken, das tangential zwischen den zwei Werkzeugen eingeführt ist.

2. Drück-Form-Vorrichtung nach Anspruch 1, **dadurch gekennzeichnet, dass** sich die Drückfläche (103, 203; 103', 203') jeder Lamelle (102, 202; 102, 202') jedes Werkzeugs (100, 200; 100', 200') zwischen ihrem ersten Ende (103A, 203A) und ihrem zweiten Ende (103B, 203B) erstreckt, indem sie mit der entsprechenden zentralen Achse (X100, X200; X100', X200') einen Neigungswinkel (α100, α200) bildet, der im Bereich zwischen 30° und 60° liegt.

3. Drück-Form-Vorrichtung nach Anspruch 2, **dadurch gekennzeichnet, dass** der Neigungswinkel (α100, α200) gleich 45° ist.

4. Drück-Form-Vorrichtung nach einem der Ansprüche 2 oder 3, **dadurch gekennzeichnet, dass** bei jedem Werkzeug (100, 200; 100', 200') der Neigungswinkel (α100, α200) einen gleichen Wert für alle Drückflächen (103, 203; 103', 203') des Werkzeugs aufweist.

5. Drück-Form-Vorrichtung nach Anspruch 2, **dadurch gekennzeichnet, dass** bei jedem Werkzeug der Neigungswinkel die Werte zwischen den jeweiligen Drückflächen von zwei aufeinanderfolgenden Lamellen ändert.

6. Drück-Form-Vorrichtung nach einem der vorhergehenden Ansprüche, **dadurch gekennzeichnet, dass** für jedes Werkzeug (100, 200; 100', 200') die jeweiligen Drückflächen (103, 203; 103', 203') von zwei aufeinanderfolgenden Lamellen (102, 202; 102', 202') im Winkel voneinander um einen Versetzungswinkel (β100) versetzt sind, der im Bereich zwischen 45° und 110° liegt.

7. Drück-Form-Vorrichtung nach Anspruch 6, **dadurch gekennzeichnet, dass** der Versetzungswinkel (β100) gleich 90° ist.

8. Drück-Form-Vorrichtung nach einem der vorhergehenden Ansprüche, **dadurch gekennzeichnet, dass** jede Lamelle (202) des einen und/oder des anderen der Werkzeuge (100, 200) des oder jeden Paars von Werkzeugen mit einer Rippe (204) versehen ist, die radial von der entsprechenden Drückfläche (203) vorspringt, die eine orthoradiale Dimension (d204) darstellt, die kleiner als die orthoradiale Dimension (d203) der Drückfläche ist, und die sich zwischen dem ersten Ende (203A) und dem zweiten (203B) Ende der Drückfläche erstreckt.

9. Drück-Form-Vorrichtung nach einem der vorhergehenden Ansprüche, **dadurch gekennzeichnet, dass** jede Drückfläche (103, 203) ihr Ende zwischen ihrem ersten (103A, 203A) und zweiten (103B, 203B) Ende aufweist, das radial am weitesten von der entsprechenden radialen Achse (X100, X200) entfernt, das abgestumpft ist.

10. Drück-Form-Vorrichtung nach einem der vorhergehenden Ansprüche, **dadurch gekennzeichnet, dass** die Drück-Form-Vorrichtung (3) außerdem mindestens einen Abschaber (300) umfasst, der ausgelegt ist, um den äußeren Umfang eines der Werkzeuge (100, 200) des oder jedes Paars von Werkzeugen abzuschaben, und die mindestens eine Blasdüse (302) beinhaltet, die angeordnet ist, um einen Gasfluss sowohl tangential auf den äußeren Umfang des Werkzeugs als auch quer auf die Lamellen (102, 202) dieses Werkzeugs zu projizieren.

11. Drück-Form-Vorrichtung nach einem der vorhergehenden Ansprüche, **dadurch gekennzeichnet, dass** mindestens eines der Werkzeuge (100, 200) des oder jedes Paars von Werkzeugen ausgestattet ist:
- auf seiner ersten axialen Seite (200A) mit einem ersten seitlichen Flansch (205A), der die jeweiligen ersten Enden (203A) der Drückflächen (203) des entsprechenden Werkzeugs (200) auf dem gesamten äußeren Umfang dieses Werkzeugs umgibt, und
- auf seiner zweiten axialen Seite (200B) einen zweiten seitlichen Flansch (205B), der die jeweiligen zweiten Enden (203B) der Drückflächen der entsprechenden Werkzeugs auf dem gesamten äußeren Umfang des Werkzeugs umgibt.

12. Drück-Form-Vorrichtung nach einem der vorhergehenden Ansprüche, **dadurch gekennzeichnet, dass** jede der Lamellen (102', 202') jedes Werkzeugs (100', 200') des oder jedes Paars von Werkzeugen zwei Flanken (106', 206') aufweist, sie sich auf beiden Seiten gemäß einer orthoradialen Richtung zur entsprechenden zentralen Achse (X100', X200') der Lamelle befinden, und die fortschreitend voneinander gleichzeitig divergieren, wenn die Lamelle radial durchlaufen wird, von ihrer Drückfläche (103', 203') hin zur entsprechenden zentralen Achse, und wenn die Lamelle axial durchlaufen wird, vom Ende des Drückfläche, die radial am wenigsten von der entsprechenden zentralen Achse entfernt ist, bis zum gegenüberliegenden Ende der Drückfläche, die radial am weitesten von der entsprechenden zentralen Achse entfernt ist.

13. Drück-Form-Vorrichtung nach einem der vorhergehenden Ansprüche, **dadurch gekennzeichnet, dass** mindestens eines der Werkzeuge (100', 200') des oder jedes Paars von Werkzeugen ausgestattet ist:
- auf seiner ersten axialen Seite (100A') mit einer ersten seitlichen Krone (107'), deren äußere Seite in die axiale Verlängerung der axialen Enden der Laschen (102') des entsprechenden Werkzeugs (100') eingeschrieben ist, die sich auf der ersten axialen Seite befindet, und
- auf seiner zweiten axialen Seite (100B') mit einer zweiten seitlichen Krone (108'), deren äußere Seite in die axiale Verlängerung der axialen Enden der Laschen des entsprechenden Werkzeugs eingeschrieben ist, die sich auf der zweiten axialen Seite des entsprechenden Werkzeugs befinden.

14. System zur kontinuierlichen Herstellung von in Beutelform coextrudierten Lebensmittelprodukten, umfassend:
- eine kontinuierliche Versorgung (4) mit mindestens einem coextrudierten Lebensmittelrohr (2), und
- eine Drück-Form-Vorrichtung (3) gemäß einem der vorhergehenden Ansprüchen, die ebenso viele Paare von Werkzeugen (100, 200) wie Rohre zur kontinuierlichen Versorgung (4) umfasst, wobei jedes Rohr dazu vorgesehen ist, tangential zwischen die entsprechenden äußeren Umfänge der Werkzeuge (100, 200) des entsprechenden Paars von Werkzeugen eingeführt zu werden.

## Claims

1. - A pinching-shaping device (3), comprising at least one pair of tools (100, 200; 100', 200') that are cylindrical, each tool presenting a central axis (X100, X200; X100', X200') around which the corresponding tool is adapted to be rotated,
wherein the tools of the or each pair of tools are arranged such that the respective central axes of the tools are substantially parallel and the respective outer peripheries of the tools are applied tangentially against each other to pinch-shape a strand (2) inserted tangentially between the tools when the tools are rotated,
wherein the outer periphery of each tool is provided with blades (102, 202; 102', 202'), which radially protrude, which are successively distributed around the corresponding central axis and which each provide, on their free edge radially opposite to the central axis, a pinching surface (103, 203 ; 103', 203') extending between first (103A, 203A) and second (103B, 203B) ends of the pinching surface which are opposite to each other along the central axis, the respective first ends of the pinching surfaces of each tool being all located on a same first axial side (100A, 200A) of the tool, while the respective second ends of the pinching surfaces of each tool are all located on a same second axial side (100B, 200B) of the tool, opposite to the first axial side along the corresponding central axis,
and wherein the pinching surface of each blade of each tool runs inclined with respect to the corresponding central axis between the first end and the second end of the pinching surface,
**characterized in that** the blades (102, 202; 102', 202') of each tool (100, 200; 100', 200') are distributed along the outer periphery of the tool alternately between at least one first blade (102.1, 202.1; 102. 1'; 201.1'), the pinching surface of which has its first end radially further from the corresponding central axis (X100, X200; X100', X200') than its second end, and at least one second blade (102.2, 202.2; 102.2', 202. 2'), the pinching surface of which has its second end radially further from the corresponding central axis than its first end, so that each time one blade amongst the blades of a first of the two tools of the or each pair of tools is radially interposed between the two tools during the rotation of the two tools around their central axis, said one blade of the first tool is radially aligned with one of the blades of the second tool, the pinching surface of which is inclined in a complementary manner to the pinching surface of said one blade of the first tool, in order to pinch between the respective pinching surfaces of the two blades thus aligned a strand (2) inserted tangentially between the two tools.

2. The pinching-shaping device according to the claim 1, **characterized in that** the pinching surface (103, 203; 103', 203') of each blade (102, 202; 102, 202') of each tool (100, 200; 100', 200') extends between its first end (103A, 203A) and its second end (103B, 203B) forming with the corresponding central axis (X100, X200; X100', X200') an angle of inclination (α100, α200) which is between 30° and 60°.

3. The pinching-shaping device according to claim 2, **characterized in that** the angle of inclination (α100, α200) is equal to 45°.

4. The pinching-shaping device according to one of the claims 2 or 3, **characterized in that** for each tool (100, 200; 100', 200') the angle of inclination (α100, α200) has the same value for all the pinching surfaces (103, 203; 103', 203') of the tool.

5. The pinching-shaping device according to the claim 2, **characterized in that** for each tool, the angle of inclination changes its value between the respective pinching surfaces of two successive blades.

6. The pinching-shaping device according to any one of the preceding claims, **characterized in that** for each tool (100, 200; 100', 200') the respective pinching surfaces (103, 203; 103', 203') of two successive blades (102, 202; 102', 202') are angularly offset with respect to each other by an offset angle (β100) which is between 45° and 110°.

7. The pinching-shaping device according to the claim 6, **characterized in that** the offset angle (β100) is equal to 90°.

8. The pinching-shaping device according to any one of the preceding claims, **characterized in that** each blade (202) of one and/or the other tool (100, 200) of the or each pair of tools is provided with a rib (204), which radially protrudes from the corresponding pinching surface (203), which presents a smaller orthoradial dimension (d204) than the orthoradial dimension (d203) of the pinching surface, and which extends between the first (203A) and second (203B) ends of the pinching surface.

9. The pinching-shaping device according to any one of the preceding claims, **characterized in that** each pinching surface (103, 203) has its end, among its first (103A, 203A) and second (103B, 203B) ends, the furthest radially from the corresponding central axis (X100, X200), which is blunt.

10. The pinching-shaping device according to any one of the preceding claims, **characterized in that** the pinching-shaping device (3) further comprises at least one scraper (300), which is adapted to scrape the outer periphery of one of the tools (100, 200) of the or each pair of tools and which incorporates at least one blowing nozzle (302) arranged to project a gas flow both tangentially to the outer periphery of the tool and transversely to the blades (102, 202) of the tool.

11. - The pinching-shaping device according to any one of the preceding claims, **characterized in that** at least one of the tools (100, 200) of the or each pair of tools is provided with:
- on the first axial side (200A), a first side flange (205A) which borders the respective first ends (203A) of the pinching surfaces (203) of the corresponding tool (200) over the entire outer periphery of the tool, and
- on the second axial side (200B), a second side flange (205B) which borders the respective second ends (203B) of the pinching surfaces of the corresponding tool over the entire outer periphery of the tool.

12. The pinching-shaping device according to any one of the preceding claims, **characterized in that** each of the blades (102', 202') of each tool (100', 200') of the or each pair of tools presents two flanks (106', 206'), which are located on either side, in an orthoradial direction to the corresponding central axis (X100', X200'), of the blade and which progressively diverge from each other both when the blade is radially scrolled from its pinching surface (103', 203') towards the corresponding central axis and when the blade is axially scrolled from the end of the pinching surface, which is the least radially distant from the corresponding central axis, to the opposite end of the pinching surface, which is the most radially distant from the corresponding central axis.

13. The pinching-shaping device according to any one of the preceding claims, **characterized in that** at least one of the tools (100', 200') of the or each pair of tools is provided with:
- on its first axial side (100A'), a first lateral crown (107') an outer face of which is inscribed in an axial extension of the axial ends of the tabs (102') of the corresponding tool (100'), located on the first axial side, and
- on its second axial side (100B'), a second lateral crown (108') an outer face of which is inscribed in an axial extension of the axial ends of the tabs of the corresponding tool, located on the second axial side of the corresponding tool.

14. - A system for the continuous production of berlingot-shaped co-extruded food products, comprising:
- a continuous supply (4) of at least one co-extruded food strand (2), and
- a pinching-shaping device (3) according to any of the preceding claims, which comprises as many pair(s) of tools (100, 200) as there is/are co-extruded food strand(s), each strand being intended to be inserted tangentially between the respective outer peripheries of the tools (100, 200) of the corresponding pair of tools.
